# EUROPÄISCHE PATENTSCHRIFT

(11) **EP 1 507 684 B1**
(45) Veröffentlichungstag und Bekanntmachung des Hinweises auf die Patenterteilung: **07.06.2006**
(21) Anmeldenummer: 03722421.9
(22) Anmeldetag: 09.04.2003
(51) Int. Cl.: B60R 7/00, F16B 9/02

(54) **HALTETEIL ZUR ANBRINGUNG VON METALLRAHMENNETZEN, INSBESONDERE VON KOFFERRAUMSEITENNETZEN**
HOLDING ELEMENT FOR MOUNTING METAL FRAME NETS, ESPECIALLY LATERAL TRUNK NETS
ELEMENT DE MAINTIEN POUR L'INSTALLATION DE FILETS A CADRE METALLIQUE, NOTAMMENT DE FILETS LATERAUX DE COFFRE

(30) Priorität: 27.05.2002 DE 20208280 U
(43) Veröffentlichungstag der Anmeldung: 23.02.2005
(73) Patentinhaber: Nölle-Pepin GmbH & Betriebs KG, 58332 Schwelm (DE)
(72) Erfinder: NÖLLE, Hans, 58332 Schwelm (DE)
(74) Vertreter: Lelgemann, Karl-Heinz
(86) Internationale Anmeldenummer: PCT/EP2003/003648
(87) Internationale Veröffentlichungsnummer: WO 2003/099615

(56) Entgegenhaltungen:
- DE-A- 2 611 622
- DE-U- 6 752 540
- FR-A- 2 809 462
- GB-A- 849 723
- GB-A- 1 396 636
- US-A- 3 231 300
- US-A- 3 378 219
- US-B1- 6 202 261

## Beschreibung

Die Erfindung bezieht sich auf eine Halteanordnung zur Fixierung eines Kofferraumseitennetzes gemäss den Merkmalen des Anspruchs 1.

Die zunehmende Verwendung von Netzen in Kraftfahrzeugen und anderen vergleichbaren Fahrzeugen bringt insoweit Probleme mit sich, als diese Netze, bei denen es sich häufig um Metallrahmennetze handelt, in geeigneter Weise an den für sie vorgesehenen Abschnitten von Wandungen, Rückenlehnen etc. fixiert werden müssen.

Eine Halteanordnung entsprechend den Merkmalen des Oberbegriffs des Anspruchs 1 zeigt die Patentschrift US 6 202 261 B1.

Der Erfindung liegt die Aufgabe zugrunde, eine Halteanordnung mit Halteteilen zur Anbringung von Kofferraumseitennetzen zu schaffen, welche mit einem geringst möglichen Aufwand eine solide Fixierung eines Kofferraumseitennetzes, an einer Kofferraumboden- bzw. -wandverkleidung gewährleistet.

Diese Aufgabe wird erfindungsgemäß dadurch gelöst, daß der Abstand zwischen der Rasteinrichtung einerseits und dem Tellerkragen andererseits etwa der Dicke der Kofferraumboden- bzw. -wandverkleidung entspricht, an der das Halteteil mittels der Rasteinrichtung fixierbar ist. Hierdurch ergibt sich eine zuverlässige Anbringung des Halteteils an der Kofferraumboden- bzw. -wandverkleidung, die zu einer entsprechend zuverlässigen Fixierung des als Metallrahmennetz ausgebildeten Kofferraumseitennetz am gewünschten Ort führt. Die erfindungsgemäßen Halteteile können sowohl als Bestandteile des Metallrahmennetzes geliefert werden als auch an den gewünschten Stellen vorab an der Kofferraumboden- bzw. -wandverkleidung angebracht werden, wobei im letzteren Fall das Metallrahmennetz zur Montage einfach mit dem jeweiligen Fixierteil des Halteteils in Eingriff zu bringen ist. Die Halteteile sind an beliebigen Stellen der Kofferraumboden- bzw. -wandverkleidung anbringbar.

Vorteilhaft wird die Rasteinrichtung durch zumindest zwei einander vorzugsweise diametral gegenüberliegende Clipsnasen gebildet, die federnd am Halteteil ausgebildet sind und in ihrer entspannten Position die Kofferraumboden- bzw. -wandverkleidung zwischen sich und dem Tellerkragen einklemmen. Wie der Tellerkragen ragen die Clipsnasen in ihrer entspannten Stellung über den Außenumfang des sie ausbildenden Abschnitts des Halteteils vor, so daß die Kofferraumboden- bzw. -wandverkleidung zwischen den dem Tellerkragen gegenüberliegenden distalen Enden der Clipsnasen und dem Tellerkragen fixiert bzw. eingeklemmt werden kann.

Bei dem Halteteil, welches als unteres Halteteil fungiert, wird das Fixierteil des Halteteils als mit einer Mantelausnehmung ausgebildete Haltebuchse ausgestaltet, in die ein Abschnitt des Metallrahmens des Metallrahmennetzes einclipsbar ist.

Bei dem Halteteil, welches als oberes Halteteil fungiert, wird das Fixierteil des Halteteils als Einsteckaufnahme ausgebildet, in die ein Einsteckabschnitt des Metallrahmens des Metallrahmennetzes einsteckbar ist.

Als Werkstoff für das Halteteil hat sich insbesondere Kunststoff, vorzugsweise Ultramid B3S, als besonders vorteilhaft erwiesen.

Im folgenden wird die Erfindung anhand von Ausführungsformen unter Bezugnahme auf die Zeichnungen näher erläutert.
Es zeigen:
- Figur 1: eine Prinzipdarstellung einer ersten Ausführungsform eines erfindungsgemäßen unteren Halteteils der Halteanordnung;
- Figur 2: eine Schnittdarstellung der in Figur 2 gezeigten Ausführungsform des erfindungsgemäßen unteren Halteteils der Halteanordnung, um 90 Grad gedreht;
- Figur 3: eine Prinzipdarstellung einer zweiten Ausführungsform des erfindungsgemäßen oberen Halteteils der Halteanordnung; und
- Figur 4: eine Schnittdarstellung der in Figur 3 gezeigten Ausführungsform des erfindungsgemäßen oberen Halteteils der Halteanordnung, um 90 Grad gedreht.

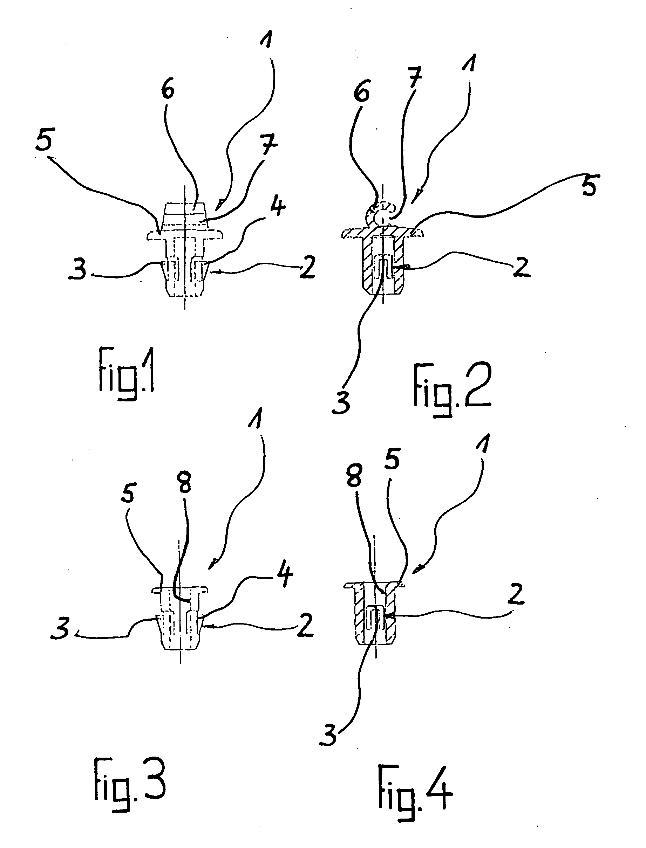

Eine in den Figuren 1 und 2 gezeigte Ausführungsform eines erfindungsgemäßen Halteteils 1 dient dazu, ein Metallrahmennetz, insbesondere ein Kofferraumseitennetz, an einer Kofferraumboden- bzw. -wandverkleidung anzubringen. Weder das Metallrahmennetz noch die Kofferraumboden- bzw. -wandverkleidung sind in den Figuren 1 bis 4 dargestellt. Das in den Figuren 1 und 2 gezeigte Halteteil hat eine Rasteinrichtung 2, die im dargestellten Ausführungsbeispiel durch zwei Clipsnasen 3, 4 gebildet wird. Die beiden Clipsnasen 3, 4 sind im dargestellten Ausführungsbeispiel einstückig mit dem Halteteil 1 ausgebildet und können - aufgrund der Elastizität des das Halteteil 1 ausbildenden Werkstoffs - in bezug auf das übrige Halteteil 1 um ihr proximales Ende federn. Die beiden Clipsnasen 3, 4 sind einander diametral gegenüberliegend am Umfang des Halteteils 1 angeordnet und sie erweitern sich von ihren proximalen zu ihren distalen Enden, mit denen sie im entspannten Zustand über den Außenumfang an dem die Clipsnasen 3, 4 ausbildenden Abschnitt des Halteteils 1 vorstehen.

Des weiteren hat das Halteteil 1 einen radial vorstehenden Tellerkragen 5, der den freien distalen Enden der Clipsnasen 3, 4 der Rasteinrichtung 2 gegenüberliegt.

Der Abstand zwischen der den Clipsnasen 3, 4 gegenüberliegenden Unterseite des Tellerkragens 5 einerseits und den freien distalen Enden der Clipsnasen 3, 4 andererseits entspricht in etwa der Dicke der Kofferraumboden- bzw. -wandverkleidung, so daß letztere zwischen den Clipsnasen 3, 4 und dem Tellerkragen 5 einklemmbar ist.

Wenn das Halteteil 1 durch die Kofferraumboden- bzw. -wandverkleidung gesteckt wird, federn die Clipsnasen 3, 4 aufgrund der Elastizität des das Halteteil 1 ausbildenden Werkstoffs radial einwärts, wobei sie unmittelbar in ihre in Figur 1 gezeigte entspannte Stellung zurückfedern, sobald die Clipsnasen 3, 4 insgesamt durch die Kofferraumboden- bzw. -wandverkleidung hindurchgeführt sind. Sobald dies geschehen ist, wird die Kofferraumboden- bzw. -wandverkleidung zwischen den distalen Enden der Clipsnasen 3, 4 und der Unterseite des Tellerkragens 5 eingeklemmt. Das Halteteil 1 befindet sich numehr in seiner fixierten Stellung.

Zur Fixierung eines Abschnitts des Metallrahmens des Metallrahmennetzes weist das in den Figuren 1 und 2 gezeigte Halteteil 1 eine Haltebuchse 6 auf, die eine zylindrische Aufnahme für einen Abschnitt des Metallrahmens ausbildet, wobei diese zylindrische Aufnahme durch eine Mantelausnehmung 7 der Haltebuchse 6 zugänglich ist. Die Haltebuchse 6 ist auf der den Clipsnasen 3, 4 abgewandten Seite des Tellerkragens 5 ausgebildet, wobei die Mantelausnehmung 7 unmittelbar oberhalb des Tellerkragens 5 angeordnet ist. Die Weite der Mantelausnehmung 7 ist etwas geringer als der Durchmesser des Metallrahmens des Metallrahmennetzes, so daß der Metallrahmen innerhalb der Haltebuchse 6 fixiert ist, wenn er erst einmal unter Ausnutzung der Elastizitätseigenschaften des das Halteteil 1 ausbildenden Werkstoffs in die Haltebuchse 6 bzw. deren zylindrische Aufnahme hineingedrückt worden ist.

Das in den Figuren 3 und 4 gezeigte Halteteil 1 unterscheidet sich von dem in den Figuren 1 und 2 gezeigten Halteteil 1 dadurch, daß sein Fixierteil als Einsteckaufnahme 8 ausgebildet ist, in die ein Einsteckabschnitt des Metallrahmens des Metallrahmennetzes einsteckbar ist. Bei dem in den Figuren 3 und 4 gezeigten Ausführungsbeispiel erstreckt sich die Einsteckaufnahme 8 in Längsrichtung durch das Halteteil 1.

Das in den Figuren 1 und 2 gezeigte Halteteil 1 dient als unterer, das in den Figuren 3 und 4 gezeigte Halteteil 1 als oberer Halter für die entsprechenden Abschnitte des Metallrahmens des Metallrahmennetzes.

Als für das Halteteil 1 in den Ausführungsformen gemäß den Figuren 1 und 2 bzw. 3 und 4 besonders geeigneter Werkstoff hat sich der Kunststoff Ultramid B3S erwiesen.

## Patentansprüche

1. Halteanordnung zur Fixierung eines Kofferraumseitennetzes, mit Halteteilen (1), mittels denen das Kofferraumseitennetz an einem Kofferraumboden bzw. an einer Kofferraumwand fixierbar ist, die einen Tellerkragen (5) und ein Fixierteil (6, 8) aufweisen und die an einer Kofferraumboden- bzw. -wandverkleidung fixierbar sind, **dadurch gekennzeichnet, dass** jedes Halteteil (1) eine Rasteinrichtung (2) aufweist, deren Abstand zum Tellerkragen (5) etwa der Dicke der Kofferraumboden- bzw. -wandverkleidung entspricht, dass das Kofferraumseitennetz einen Metallrahmen aufweist, der mit den Fixierteilen (6, 8) der Halteteile (1) in Fixiereingriff ist, und dass die Halteanordnung untere und obere Halteteile (1) aufweist, wobei die Fixierteile der unteren Halteteile (1) als mit einer Mantelausnehmung (7) ausgebildete Haltebuchsen (6) ausgestaltet sind, in die ein Abschnitt des Metallrahmens des Metallrahmennetzes einclipsbar ist, und die Fixierteile (6) der oberen Halteteile (1) als Einsteckaufnahme (8) ausgebildet sind, in die ein Einsteckabschnitt des Metallrahmens des Metallrahmennetzes einsteckbar ist.

2. Halteanordnung nach Anspruch 1 mit einem Halteteil (1), bei dem die Rasteinrichtung (2) durch zumindest zwei einander vorzugsweise diametral gegenüberliegende Clipsnasen (3, 4) gebildet ist, die federnd am Halteteil ausgebildet sind und in ihrer entspannten Position die Kofferraumboden- bzw. -wandverkleidung zwischen sich und dem Tellerkragen (5) einklemmen.

3. Halteanordnung nach einem der Ansprüche 1 oder 2, mit einem Halteteil (1) das aus Kunststoff, vorzugsweise aus Ultramid B3S, hergestellt ist.

## Claims

1. A holding arrangement for fixing a lateral trunk net, comprising holding parts (1) by which means the lateral trunk net can be fixed to a trunk bottom or to a trunk wall, which comprise an annular shoulder (5) and a fixing part (6, 8) and which can be fixed to a trunk bottom or trunk wall covering, **characterised in that** each holding part (1) has a snap-in device (2) whose distance from the annular shoulder (5) approximately corresponds to the thickness of the trunk bottom or the trunk wall covering, that the lateral trunk net has a metal frame which is in fixing engagement with the fixing parts (6, 8) of the holding parts (1), and that the holding arrangement has upper and lower holding parts (1) wherein the fixing parts of the lower holding parts (1) are configured as holding sockets (6) constructed with a cladding recess (7) into which a section of the metal frame of the metal frame net can be clipped and the fixing parts (6) of the upper holding parts (1) are constructed as a plug-in receptacle (8) into which a plug-in section of the metal frame of the metal frame net is plugged.

2. The holding arrangement according to claim 1, comprising a holding part (1) wherein the clip-in device (2) is formed by at least two opposing, preferably diametrically opposing clip lugs (3, 4) which are spring-mounted on the holding part and in their released position clamp the trunk bottom or trunk wall covering between themselves and the annular shoulder (5).

3. The holding arrangement according to any one of claims 1 or 2, comprising a holding part (1) which is made of plastic, preferably of Ultramid B3S.

## Revendications

1. Agencement de maintien pour la fixation d'un filet latéral de coffre à bagages, avec des éléments de maintien (1) permettant de fixer le filet latéral de coffre à bagages sur un fond du coffre à bagages ou sur une paroi du coffre à bagages et comportant une collerette en forme de disque (5) et un élément de fixation (6, 8) et pouvant être fixés sur un habillage du fond du coffre à bagages ou des parois du coffre à bagages, **caractérisé en ce que** chaque élément de maintien (1) comporte un dispositif d'enclenchement (2) dont la distance par rapport à la collerette en forme de disque (5) correspond approximativement à l'épaisseur de l'habillage du fond du coffre à bagages ou des parois du coffre à bagages, **en ce que** le filet latéral de coffre à bagages comporte un cadre métallique qui est en engagement de fixation avec les éléments de fixation (6, 8) des éléments de maintien (1) et **en ce que** l'agencement de maintien comporte des éléments de maintien (1) inférieurs et supérieurs, les éléments de fixation des éléments de maintien inférieurs (1) étant conçus sous la forme de douilles de maintien (6) formées avec un évidement dans leur enveloppe (7) et dans lesquelles on peut clipser une partie du cadre métallique du filet à cadre métallique et les éléments de fixation (6) des éléments de maintien supérieurs (1) étant conçus sous la forme de logements à emboîtement (8) dans lesquels on peut emboîter une partie emboîtable du cadre métallique du filet à cadre métallique.

2. Agencement de maintien selon la revendication 1, avec un élément de maintien (1) sur lequel le dispositif d'enclenchement (2) est formé par au moins deux tenons à clipser (3, 4) de préférence diamétralement opposés, qui sont conçus de façon élastique sur l'élément de maintien et qui dans leur position détendue serrent entre eux et la collerette en forme de disque (5) l'habillage du fond du coffre à bagages ou des parois du coffre à bagages.

3. Agencement de maintien selon l'une quelconque des revendications 1 ou 2, avec un élément de maintien (1) qui est fabriqué en matière plastique, de préférence en Ultramid B3S.
